# EUROPEAN PATENT APPLICATION

(11) **EP 3 636 372 A1**
(43) Date of publication of application: **15.04.2020**
(21) Application number: 19200389.5
(22) Date of filing: 30.09.2019
(51) Int. Cl.: B23D 61/12

(54) **BAND SAW BLADE**

(30) Priority: 09.10.2018 SE 1851230
(71) Applicant: Kapman AB, 531 30 Lidköping (SE)
(72) Inventor: Wallin, Patrik, 521 94 FALKÖPING (SE)
(74) Representative: Groth & Co. KB

(57) **Abstract**

A band saw blade (10) having a continuous band portion with a back side (11) and a toothed side (12) and with a working direction (WD), primarily for sawing isolation material of mineral wool, the blade (10) at its toothed side (12) having teeth (T₁-Tn) in which each tooth (Tₙ) having a toothface (TF₁-TFₙ) and a toothback (TB₁-TBₙ) with respective angles α and β, and that tooth gullets (G₁-Gₙ) are located between each tooth (Tₙ), wherein each tooth (Tₙ) is provided with a double tip of which one tip is a leading tip (LTₙ) and of which the other is a trailing tip (TTₙ) and between which tips of the double tip of each tooth there is a tip gullet (TGₙ).

## Description

### TECHNICAL FIELD

The present invention relates to the field of machine tools and especially band saw blades sawing isolation material such as mineral wool.

### BACKGROUND OF THE INVENTION

Sawing insulation material of the mineral wool type causes some challenges. It's about getting a clean and straight cut without too much dust generation. For hand sawing for on-site modifications, there exist manually handled insulation saws that works well. However in the manufacturing process of isolation material, for example Rockwool© or Paroc© type of products, band saws are often used for its formation and thickness, either to standard formats or to customized formats. There is currently no customized band saw product on the market, but with varying success standard bimetal band saw blades intended for metal is used.

Problems with using bimetal band saw blades in shaping and forming such isolation material is that mineral wool is extremely abrasive and although the tooth tip, preferably of high speed steel, indeed are under great wear it is the very tooth that is under the most severe abrasive wear because the base material is softer than the top material of the tooth. This may cause the entire tooth to be removed even if there is still a top tip left. It is therefore not advantages to use, for example, hard metal teeth top as it is the base of the tooth which has the fastest abrasive wear.

The document EP 1333964 (B27B1/00) is disclosing a wood cutting band saw blade with a tooth form configured to reduce saw dust passing the walls of the blade. In an embodiment a tooth of the saw blade has a tip and a shelf tip. The shelf tip is configured to function to collect saw dust generated during cutting of a kerf in a work piece.

Such a previously known saw blade for cutting wood is not suitable for use when sawing isolation material since the dust generation when cutting isolation material would anyhow be to a great disadvantage. Using such a wood cutting blade for cutting isolation material would rip the isolation material apart and the accuracy of the cut is being lost.

### OBJECT OF THE INVENTION

One object of the present invention is to provide a band saw blade having a configuration suitable for cutting isolation material such as mineral wool.

A further object is to provide a band saw blade which is more resistant to wear than previous known band saw blades when sawing isolation material, particularly of the mineral wool type.

It is also an object with the present invention to at an extended duration keeping the tips of the blade sharp and to give cleaner and straighter cuts with less dust generation.

An object is also to provide for a longer common tooth base in the working direction further increasing the wear out time of the blade.

### DISCLOSURE OF THE INVENTION

These objects are achieved by means of the present invention as defined in the accompanying independent patent claim. Suitable further embodiments of the invention will be apparent from the accompanying dependent patent claims.

The invention relates to a band saw blade having a continuous band portion with a back side and a toothed side designed for a working direction of the blade. Preferably the blade is designed for sawing isolation material of mineral wool. The blade having at its toothed side teeth in which each tooth having a toothface and a toothback with respective angles α and β both less than 90°, preferably less than 45° and most preferably less than 30°. These angles provides for a working direction for each tooth. Tooth gullets are located between each tooth. Each tooth is provided with a double tip of which one tip is a leading tip and of which the other is a trailing tip and between which tips of the double tip of each tooth there is a tip gullet.

Each double tip of a specific tooth has the same perpendicular distance from its tip gullet.

In an embodiment of the invention a base of the leading tip and a base of the trailing tip of each tooth is connected to each other at the tip gullet by a material bridge having the same hardened tooth material as the tips and which material bridge is connected to the common base of the tooth by a weld.

In an embodiment of the invention the teeth are arranged in series of groups. Each group has a number of teeth arranged in a sequential order and can have either the same tooth height or a sequential deceasing/increasing height of tooth heights. Also a sequential set pattern can be provided for each group.

In an embodiment of the invention the distance that is parallel to the working direction of the blade between the leading tip and the trailing tip of a tooth is the same for all teeth.

In an embodiment of the invention the angle β is larger than the angle α. This angle β provides for a more wear resistant tooth base for a more decreased angle.

In an embodiment of the invention the distance that is parallel to the working direction of the blade between the trailing tip of a leading tooth and the leading tip of a trailing tooth is the same for all teeth.

In an embodiment of the invention the distance that is parallel to the working direction of the blade between the trailing tip of a leading tooth and the leading tip of a trailing tooth decreases from a maximum value for the first tooth gullet of the first tooth to a minimum value for a tooth between the first tooth and the last tooth and increases for the remaining teeth to the second maximum value for the last tooth in each group of teeth.

In an embodiment of the invention the tip gullet depth of a single tooth measured as a perpendicular distance in relation to the working direction of the single tooth is the same for all teeth.

In an embodiment of the invention the set angle of each tooth is 4-10°, preferably 8°.

In an embodiment of the invention the twist angle of each tooth is 0-8°, preferably 6°.

In an embodiment of the invention the tooth gullet depth measured as a perpendicular distance in relation to the working direction of the single tooth is the same for all teeth.

In an embodiment of the invention the tooth gullet depth measured as a perpendicular distance in relation to the working direction of the single tooth decreases from a maximum value for the first tooth gullet of the first tooth to a minimum value for a tooth between the first tooth and the last tooth and increases for the remaining teeth to the second maximum value for the last tooth in each group of teeth.

In an embodiment of the invention each group of teeth has a set pattern of the first tooth being unset and the following teeth is alternating set to right and left with the first set tooth in each group set in either of the two directions.

In an embodiment of the invention the maximum number n of teeth in each group is an odd number, preferably n=5 or n=7.

In an embodiment of the invention the maximum number n of teeth in each group is an even number, preferably n=4, n=6 or n=8.

In order to minimize the wear of the trailing tip of the double tip of the tooth, the material of the each tip base is connected to each other in that the tooth base at the tip gullet consist of a contiguous part of the tooth material. With such a tooth design there is no backing material in the "small" tooth lid where the corresponding abrasion can occur.

With this design, there are dual tooth-tips that better resist abrasion and stay sharp longer which gives cleaner and sharper cuts with less dust formation. Moreover, the base of the common tooth is wider/longer seen in the saw direction. The latter causes it to take longer before replacement due to severe abrasion.

### BRIEF DESCRIPTION OF THE DRAWINGS

The invention will now be described in more detail with reference to an exemplifying embodiment thereof illustrated in the accompanying drawings, in which
- Figure 1: illustrates a part of a band saw blade according to a first embodiment of the invention;
- Figure 2: illustrates a first group setting of a blade according to the invention;
- Figure 3: illustrates a separate tooth of a blade according to the invention;
- Figure 4: illustrates a set twist angle of a blade according to the invention;
- Figure 5: illustrates a set angle of a blade according to the invention;
- Figure 6: illustrates a part of a band saw blade according to a second embodiment of the invention;
- Figure 7: illustrates a second group setting of a blade according to the second embodiment of the invention.

### DESCRIPTION OF THE INVENTION

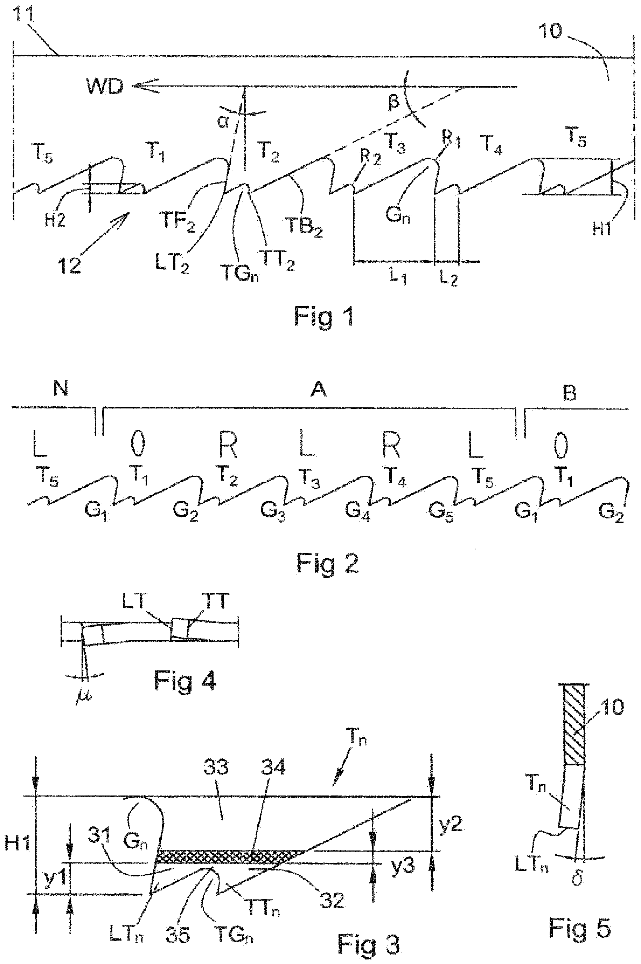

In order to more clearly describe the present invention a band saw blade according to a first embodiment of the invention will be described in Figure 1.

Figure 1 shows a part of a band saw blade 10 having a back side 11 and a toothed side 12. The working direction WD is indicated in the figure with an arrow directed to the left. As can be seen in the figure, the disclosed embodiment has a straight line back side, however in other embodiments other geometries of the back side is possible, such as different forms of wavy backs also in combination with straight line back sections. The blade having at its toothed side 12, teeth T₁-Tₙ, of which a group T₁-T₅ are disclosed in the figure. Each tooth Tₙ having a toothface TF₁-TFₙ and a toothback TB₁-TBₙ with angles α of a toothface TFₙ and β of a toothback TBₙ and in that the angle α is the angle between the toothface TFₙ and a line perpendicular to the working direction WD of the blade and in that the angle β is the angle between the toothback TBₙ and the working direction WD of the blade. As is illustrated in the figure, for example in view of the second tooth T₂, β > α giving the tooth T₂ a longer base at its toothback TB₂. This increases the wear resistant of the tooth.

Each tooth Tₙ is provided with a double tip of which one tip is a leading tip LTₙ and of which the other is a trailing tip TTₙ and between which tips of the double tip of each tooth there is a tip gullet TGₙ. The angles of the toothface and toothback of the respective tips are the same as the angles of the tooth described above. Each tooth is separated from the closest adjacent tooth by a tooth gullet Gₙ which gullet has a circular bottom with the radius R₁. The tip gullet TGₙ between the leading tip LTₙ and the trailing tip TTₙ has a circular bottom with the radius R₂.

In the figure, the tooth gullet depth H1 between the top edges of the tips and the tooth gullet which in the disclosed embodiment is constant, i.e. the tooth gullet depth H1 is the same for all teeth and measured as a perpendicular distance in relation to the working direction WD of the blade.

In the figure, the tip gullet depth H2 between the top edges of the tips in the same tooth and the tip gullet of the tooth is in the disclosed embodiment constant, i.e. the tip gullet depth H2 is the same for all teeth and measured as a perpendicular distance in relation to the working direction WD of the blade.

In the figure, L₁ indicates the distance parallel to the working direction WD of the blade 10 between the trailing tip TTₙ of a leading tooth Tₙ and the leading tip LTₙ₊₁ of a trailing tooth Tₙ₊₁. In the embodiment in figure 1, L₁ is the same for all teeth T₁-Tₙ.

In the figure, L₂ indicates the distance that is parallel to the working direction WD of the blade 10 between the leading tip LTₙ and the trailing tip TTₙ of a tooth Tₙ. In the disclosed embodiment L₂ is the same for all teeth T₁-Tₙ.

In one embodiment according to the inventions the following measure proportions appear as indicated in the following table in which the maximum difference between adjacent teeth is 0.08mm and the maximum difference between the highest and the lowest tooth within any 200mm section is 0.10mm:

| Gullet | L₁ ±0.05 | L₂ ±0.05 | H1 ±0.05 | H2 ±0.05 | R₁ ±0.100 | R₂ ±0.100 | α ±1° | β ±1.0° |
|---|---|---|---|---|---|---|---|---|
| 1 | 6.50 | 2 | 3.14 | 0.84 | 0.8 | 0.4 | 10 | 28 |

Figure 2 discloses a first group setting sequence of five teeth T₁-T₅ each having the shape as described under figure 1. Each group is repeated in series making the groups A-N a complete band of a band saw blade. The figure discloses the settings for group A as follows:

| Tooth no. | T₁ | T₂ | T₃ | T₄ | T₅ |
|---|---|---|---|---|---|
| Setting | Unset | Right set | Left set | Right set | Left set |

These settings are repeated in series from group A to group B and further to the last group N for the whole band saw blade.

Between each tooth in the group there is a gullet G₁-G₅ having the same tooth gullet depth for all teeth of the whole blade in this disclosed embodiment.

Figure 3 discloses a single tooth Tₙ of a band saw blade according to the invention. The tooth having the leading tip LTₙ and the trailing tip TTₙ and between which tips the tip gullet TGₙ is located as previously described. A tip base 31 of the leading tip LTₙ and a tip base 32 of the trailing tip TTₙ of each tooth Tₙ is connected to each other at the tip gullet TGₙ by a material bridge 35. Both tips are attached to a common base 33 of the tooth Tₙ by a weld 34. Both tips are of a hardened material which is attached by a welding operation to the common base part which is of a softer material in order to resist continuous bending of the blade under motion. The material bridge 35 is having the same hardened tooth material as the tips and which material bridge 35 is thus connected to the common base 33.

The figure also indicates the height y1 of the tip including its tip base 31. The height y1 has the measure interval of 0.5 - 1.0 mm, preferably of 0.6 - 0.9 mm and most preferably 0.7 - 0.8 mm. The figure also indicates the height y2 of the tooth base 33 which both measures gives the height y3 of the weld so that y3=H1-y1-y2. However it is important that y1>H2 so that a material bridge 35 is present in order to achieve an optimum function of the saw blade.

Figure 4 discloses the set twist angle µ of the leading tip LTₙ and the trailing tip TTₙ which is between 0° and 8°, preferably 4-6°. This twist angle is the same for both tips of the tooth however the direction of the twist is dependent upon the setting.

Figure 5 discloses the setting angle δ of each tooth which angle is between 4° and 10°, preferably 8°. In the figure only one setting direction of one tooth Tₙ with its leading tip LTₙ is indicated. The section in the figure is taken through the blade 10.

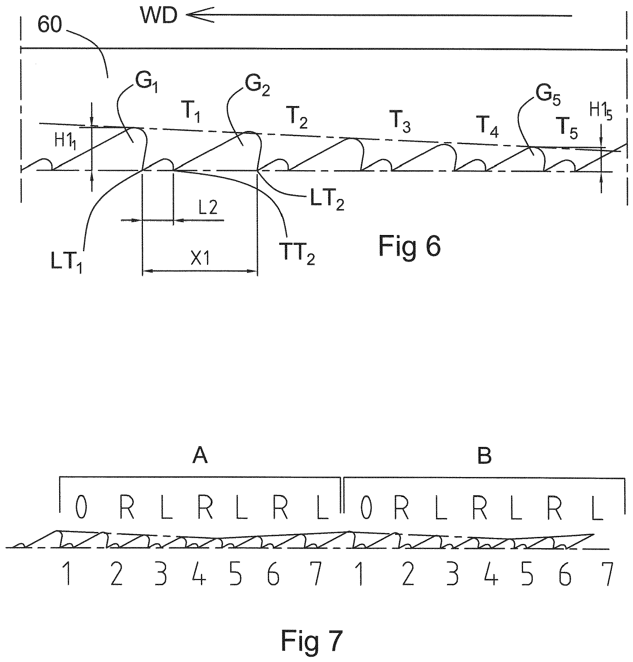

Figure 6 discloses a part of a band saw blade 60 according to a second embodiment of the invention. In the figure a sequence part of five teeth T₁-T₅ is disclosed, in that the first tooth T₁ is the highest tooth with the tooth gullet depth H1₁ decreasing its tooth gullet depth value up to the fifth tooth T₅ which is the shortest tooth with the tooth gullet depth H1₅. In the disclosed sequence each distance L2 that is parallel to the working direction WD of the blade 60 between the leading tip LT₁ and the trailing tip TT₁ of a tooth T₁ is equal for all teeth. However, in the disclosed embodiment the distance L1 between the leading tip LT1 of a tooth T1 and the leading tip LT2 of the tooth T2 behind is decreasing for each tooth in the disclosed sequence.

For this embodiment the sequence contains seven teeth arranged with a decreasing value H1 for the consecutive five first teeth T₁-T₅ and with an increasing value H1 for the last two teeth T₆-T₇ wherein the gullet for the first tooth is notated G₁ and the gullet for the second tooth is notated G₂ and the gullet for the fifth tooth is notated G₅. Except for the measure X1, the rest of the measures of this second embodiment have the same notations as the blade disclosed in figures 1 and 2 of the first embodiment. A band saw blade according to this second embodiment can have the following measures:

| Gullet | X1 ±0.05 | L2 ±0.05 | H1 ±0.05 | H2 ±0.05 | R₁ ±0.100 | R₂ ±0.100 | α ±1° | β ±1.0° |
|---|---|---|---|---|---|---|---|---|
| 1 | 5.86 | 1.5 | 2.05 | 0.54 | 0.6 | 0.4 | 10 | 28 |
| 2 | 5.56 | 1.5 | 1.87 | 0.54 | 0.6 | 0.4 | 10 | 28 |
| 3 | 5.03 | 1.5 | 1.35 | 0.54 | 0.6 | 0.4 | 10 | 28 |
| 4 | 4.54 | 1.5 | 1.28 | 0.54 | 0.6 | 0.4 | 10 | 28 |
| 5 | 4.33 | 1.5 | 1.15 | 0.54 | 0.6 | 0.4 | 10 | 28 |
| 6 | 4.79 | 1.5 | 1.42 | 0.54 | 0.6 | 0.4 | 10 | 28 |
| 7 | 5.25 | 1.5 | 1.69 | 0.54 | 0.6 | 0.4 | 10 | 28 |
| ∑ | 35.36 | | | | | | | |

Consequently the group length in this second embodiment is 35.36 mm.

For this second embodiment the value of twist and the value of setting is the same as mentioned above for the first disclosed embodiment.

Figure 7 illustrates a group setting for two consecutive appearing groups A, B of a blade according to the second embodiment of the invention where each group has seven teeth. This sequence of grouping continues for the whole blade. The setting for one group A is as follows:

| Tooth | T₁ | T₂ | T₃ | T₄ | T₅ | T₆ | T₇ |
|---|---|---|---|---|---|---|---|
| Setting | Unset | Right set | Left set | Right set | Left set | Right set | Left set |

The described two embodiments describe two different types of band saw blades each having its advantages depending of the material to be cut and at which band velocity the cutting is taken place.

However other embodiments can be developed within the scope of the present invention.

## Claims

1. A band saw blade (10) having a continuous band portion with a back side (11) and a toothed side (12) having a working direction (WD), primarily for sawing isolation material of mineral wool, the blade (10) at its toothed side (12) having teeth (T₁-Tₙ) in which each tooth (Tₙ) having a toothface (TF₁-TFₙ) and a toothback (TB₁-TBₙ) with respective angles α and β, in that the angle α is the angle between the toothface (TFₙ) and a line perpendicular to the working direction (WD) of the blade and in that the angle β is the angle between the toothback (TBₙ) and the working direction (WD) of the blade which both angles are less than 90° and that tooth gullets (G₁-Gₙ) are located between each tooth (T₁-Tₙ), **wherein** each tooth (T₁-Tₙ) is provided with a double tip of hardened material of which one tip is a leading tip (LTₙ) and of which the other is a trailing tip (TTₙ) and between which tips of the double tip of each tooth there is a tip gullet (TGₙ) and wherein angles of the toothface and toothback of the respective tips of the double tip are the same as the angles of the tooth (Tₙ), **characterized in that** a base (31) of the leading tip (LTₙ) and a base (32) of the trailing tip (TTₙ) of each tooth (Tₙ) is connected to each other at the tip gullet (TGₙ) by a material bridge (35) having the same hardened tooth material as the tips and which material bridge (35) is connected to the common base (33) of the tooth (Tₙ) by a weld (34).

2. A band saw blade according to claim 1, **characterized in that** the leading tip (LTₙ) and the trailing tip (TTₙ) of each tooth (T₁-Tₙ) have the same perpendicular distance from a line parallel with the working direction (WD) of the band saw blade (10).

3. A band saw blade according to any of the claims 1 or 2, **characterized in that** the teeth (T₁-Tn) are arranged in series of groups (A-N).

4. A band saw blade according to of the previous claims, **characterized in that** a distance (L₂) that is parallel to the working direction (WD) of the blade (10) between the leading tip (LTₙ) and the trailing tip (TTₙ) of a tooth (Tₙ) is the same for all teeth (T₁-Tₙ).

5. A band saw blade according to any of the previous claims, **characterized in that** the angle β is larger than the angle α.

6. A band saw blade according to any of the previous claims, **characterized in that** a distance (L₁) that is parallel to the working direction (WD) of the blade (10) between the trailing tip (TTₙ) of a leading tooth (Tₙ) and the leading tip (LTₙ₊₁) of a trailing tooth (Tₙ₊₁) is the same for all teeth (T₁-Tₙ).

7. A band saw blade according to claim 3 or any of the claims 4-5 being dependent on claim 3, **characterized in that** a distance (L₁) that is parallel to the working direction (WD) of the blade (10) between the trailing tip (TTₙ) of a leading tooth (Tₙ) and the leading tip (LTₙ₊₁) of a trailing tooth (Tₙ₊₁) decreases from a maximum value (Lₘₐₓ) for the first tooth gullet (Gi) of the first tooth (T₁) to a minimum value (Lₘᵢₙ) for a tooth (T_{y}) between the first tooth (T₁) and the last tooth (Tₙ) and increases for the remaining teeth (T_{y+1}-Tₙ) to the second maximum value (L) for the last tooth (Tₙ) in each group (A-N) of teeth (T₁-Tₙ).

8. A band saw blade according to any of the previous claims, **characterized in that** a tip gullet depth (H₂) of a single tooth (Tₙ) measured as a perpendicular distance in relation to the working direction (WD) of the single tooth (Tₙ) is the same for all teeth (T₁-Tₙ).

9. A band saw blade according to any of the previous claims, **characterized in that** the set angle of each tooth (Tₙ) is 4-10°, preferably 8°.

10. A band saw blade according to any of the previous claims, **characterized in that** the twist angle of each tooth (Tₙ) is 0-8°, preferably 6°.

11. A band saw blade according to any of the previous claims, **characterized in that** a tooth gullet depth (H₁) measured as a perpendicular distance in relation to the working direction (WD) of the single tooth (Tₙ) is the same for all teeth (T₁-Tₙ).

12. A band saw blade according to claim 3 or any of the claims 4-10 being dependent on claim 3, **characterized in that** a tooth gullet depth (H₁) measured as a perpendicular distance in relation to the working direction (WD) of the single tooth (Tₙ) decreases from a maximum value (Hₘₐₓ) for the first tooth gullet (G₁) of the first tooth (T₁) to a minimum value (Hₘᵢₙ) for a tooth (Tₓ) between the first tooth (T₁) and the last tooth (Tₙ) and increases for the remaining teeth (Tₓ₊₁-Tₙ) to the second maximum value (H) for the last tooth (Tₙ) in each group (A-N) of teeth (T₁-Tₙ).

13. A band saw blade according to claim 3 or any of the claims 4-12 being dependent on claim 3, **characterized in that** each group (A-N) of teeth (T₁-Tₙ) has a set pattern of the first tooth (T₁) being unset and the following teeth (T₂-Tₙ) is alternating set to right and left with the first set tooth (T₂) in each group (A-N) set in either of the two directions.

14. A band saw blade according to claim 3 or any of the claims 4-13 being dependent on claim 3, **characterized in that** the maximum number n of teeth (T₁-Tₙ) in each group (A-N) is an odd number, preferably n=5 or n=7.

15. A band saw blade according to claim 3 or any of the claims 4-13 being dependent on claim 3, **characterized in that** the maximum number n of teeth (T₁-Tₙ) in each group (A-N) is an even number, preferably n=4, n=6 or n=8.
